# EUROPÄISCHE PATENTSCHRIFT

(11) **EP 0 918 826 B1**
(45) Veröffentlichungstag und Bekanntmachung des Hinweises auf die Patenterteilung: **12.12.2001**
(21) Anmeldenummer: 97936670.5
(22) Anmeldetag: 29.07.1997
(51) Int. Cl.: C09B 5/62

(54) **VERFAHREN ZUR HERSTELLUNG VON N,N'-DIALKYLPERYLEN-3,4,9,10-TETRACARBONSÄUREDIIMIDEN**
METHOD FOR THE PRODUCTION OF N,N'-DIALKYL PERYLENE-3,4,9,10-TETRACARBOXYLIC ACID DIIMIDES
PROCEDE POUR LA PREPARATION DE DIIMIDES D'ACIDE N,N'-DIALKYLE PERYLENE-3,4,9,10-TETRACARBOXYLIQUE

(30) Priorität: 09.08.1996 DE 19632204
(43) Veröffentlichungstag der Anmeldung: 02.06.1999
(73) Patentinhaber: BASF AKTIENGESELLSCHAFT, 67056 Ludwigshafen (DE)
(72) Erfinder: HACKMANN, Claus, D-67071 Ludwigshafen (DE); ACKER, Michael, D-69124 Heidelberg (DE); HENNING, Georg, D-67061 Ludwigshafen (DE); MENSCH, Siegfried, D-67133 Maxdorf (DE)
(86) Internationale Anmeldenummer: EP9704101
(87) Internationale Veröffentlichungsnummer: WO9806786

(56) Entgegenhaltungen:
- WO-A-96/08537
- DE-B- 1 272 270
- DE-C- 276 956
- FR-A- 1 433 688
- FR-A- 2 027 743
- FR-A- 2 394 581

## Beschreibung

Die vorliegende Erfindung betrifft ein neues Verfahren zur Herstellung von N,N'-Di-C₁-C₄-alkylperylen-3,4,9,10-tetracarbonsäurediimiden (I) durch Umsetzung von Perylen-3,4,9,10-tetracarbonsäurediimid (II) mit einem C₁-C₄-Alkylhalogenid.

N,N'-Di-C₁-C₄-alkylperylen-3,4,9,10-tetracarbonsäurediimide (I; im folgenden als "Dialkylperylimide" bezeichnet), darunter vor allem das Dimethylperylimid (Ia; C.I. Pigment Red 179), stellen wichtige Pigmente zum Einfärben von Lacken, insbesondere Automobillacken und Kunststoffen dar.

Zur Herstellung des Dimethylperylimids (Ia) sind verschiedene Verfahren bekannt, die in der DE-A-27 27 484 zusammengestellt sind. So kann die Herstellung von (Ia) durch Umsetzung von Perylen-3,4,9,10-tetracarbonsäurediimid (II; im folgenden als "Perylimid" bezeichnet) mit Methylchlorid in Natronlauge unter Druck. (DE-A-12 72 270), durch Alkalihydroxidschmelze von N-Methylnaphthalincarbonsäureimid (DE-PS-276 357) oder durch Umsetzung des Perylen-3,4,9,10-tetracarbonsäuredianhydrids mit wäßrigem Methylamin unter Druck (DE-A-21 53 087) erfolgen. Nur bei der letztgenannten Umsetzung, die aufwendig ist, da das Dianhydrid zunächst durch Verseifung des Perylimids (II) hergestellt werden muß, können Pigmente in reinen bis gelbstichigen Rottönen erhalten werden, während die erstgenannten Umsetzungen Pigmente in Marrontönen ergeben, die zur Erzielung reiner Rottöne aufwendigen Reinigungsschritten wie Verküpung, alkalische Extraktion der Leukoverbindung und Reoxidation (DE-A-27 27 484) unterworfen werden müssen.

Weiterhin wird in der WO-A-96/08537 ein Verfahren zur N-Methylierung von organischen Pigmenten durch Umsetzung mit Dimethylcarbonat in Gegenwart von Triethylamin und einem polaren organischen Lösungsmittel wie Dimethylacetamid beschrieben. Bei dieser Reaktion, die bis zu 100 h dauert, werden jedoch nur Gemische von Produkten mit unterschiedlichem Methylierungsgrad erhalten, die aufgetrennt werden müssen. So wird auch das Dimethylperylimid (Ia) nur in Form eines marronfarbenen Produkts mit einem Reingehalt von 62 % erhalten.

Der Erfindung lag daher die Aufgabe zugrunde, Dialkylperylimide (I) in hohen Reinheiten und guten Ausbeuten auf wirtschaftliche Weise zugänglich zu machen.

Demgemäß wurde ein Verfahren zur Herstellung von N,N'-Di-C₁-C₄-alkylperylen-3,4,9,10-tetracarbonsäurediimiden (I) durch Umsetzung von Perylen-3,4,9,10-tetracarbonsäurediimid (II) mit einem C₁-C₄-Alkylhalogenid gefunden, welches dadurch gekennzeichnet ist, daß man die Umsetzung in einem dipolar-aprotischen organischen Lösungsmittel in Gegenwart einer anorganischen Base vornimmt.

Als dipolar-aprotische Lösungsmittel eignen sich dabei neben Sulfoxiden und Sulfolanen vor allem Carbonsäureamide, insbesondere aliphatische Carbonsäureamide (vorzugsweise N,N-Di-(C₁-C₄-alkyl)-C₁-C₂-carbonsäureamide), Lactame und cyclische und acyclische Harnstoffderivate sowie deren Mischungen. Bevorzugt werden diese Lösungsmittel in getrockneter Form eingesetzt.

Beispielsweise seien im einzelnen Dimethylsulfoxid, Sulfolan, Dimethylformamid, Diethylformamid, Dibutylformamid, Dimethylacetamid, Diethylacetamid, Dibutylacetamid, N-Formylmorpholin, N-Methylpyrrolidon, 1,3-Dimethylimidazolidin-2-on, 1,3-Dimethyltetrahydropyrimidin-2-on und Tetramethylharnstoff genannt.

Bevorzugt sind hierbei Dimethylformamid und vor allem Dimethylacetamid.

Die Menge an Lösungsmittel ist an sich nicht kritisch und beträgt in der Regel 10 bis 200 mol, vorzugsweise 40 bis 60 mol je mol Perylimid (II).

Als anorganische Base eignen sich vor allem die Alkalimetallsalze (Lithium- und bevorzugt Natrium- und Kaliumsalze) schwacher anorganischer Säuren wie Kohlensäure und Phosphorsäure sowie auch Mischungen dieser Salze.

Als besonders geeignete Beispiele sind neben Natriumhydrogencarbonat und Kaliumhydrogencarbonat Trinatriumphosphat und bevorzugt Natriumcarbonat und Kaliumcarbonat zu nennen.

Üblicherweise kommen je mol Perylimid (II) 2 bis 10 mol, vorzugsweise 2 bis 5 mol anorganische Base zum Einsatz.

Als Alkylierungsmittel sind neben den Alkyliodiden vor allem die Alkylbromide und insbesondere die Alkylchloride geeignet, die C₁-C₄-Alkylreste aufweisen.

Von besonderer Bedeutung sind die Ethyl- und die Methylhalogenide, bevorzugt Ethylchlorid und besonders bevorzugt Methylchlorid.

In der Regel werden 1 bis 20 mol, vorzugsweise 4 bis 10 mol Alkylhalogenid je mol Perylimid (II) eingesetzt.

Üblicherweise werden beim erfindungsgemäßen Verfahren keine Tenside eingesetzt. Soll die Umsetzung jedoch in Gegenwart dieser Mittel durchgeführt werden, so sind vor allem kationische Tenside wie
Ammoniumsalze der Formel R₄N⁺X⁻, in der die Reste R gleiche oder verschiedene Alkylgruppen (in der Regel C₁-C₁₆) und/oder Arylgruppen (in der Regel Phenyl oder Benzyl) bedeuten und die Anionen X⁻ vorzugsweise für Anionen anorganischer Säuren, wie Chlorid, Bromid, Iodid, Hydrogensulfat, Methylsulfat, Perchlorat und Hydroxid, aber auch für Anionen organischer Säuren, wie Benzoat, stehen, wie Tri(C₁-C₄-alkyl)phenyl-, Tri(C₁-C₄-alkyl)benzyl-, Di(C₁-C₄-alkyl)dibenzyl- und C₁₀-C₁₆-Alkyltri(C₁-C₄-alkyl)ammoniumsalze;
Pyridiniumsalze der Formel R(C₅H₅N)⁺X⁻, wie N-C₁₀-C₁₆-Alkyl- und N-Phenyl-C₇-C₁₀-alkylpyridiniumsalze;
Phosphoniumsalze der Formel R₄P⁺X⁻
geeignet.

Bevorzugt sind dabei die Phosphonium- und besonders die Ammoniumsalze zu nennen.

Im einzelnen seien genannt: Tetra-n-butylammoniumchlorid, -bromid, -iodid, -hydrogensulfat und -hydroxid, Tetra-n-pentylammoniumchlorid und -bromid, Tetra-n-hexylammoniumchlorid, -bromid und -hydrogensulfat, Trioctylpropylammoniumchlorid und -bromid, Tricaprylmethylammoniumchlorid, Cetyltrimethylammoniumchlorid, -bromid und -methylsulfat, Lauryltrimethylammoniumchlorid, Lauryltriethylammoniumchlorid, Phenyltrimethylammoniumchlorid, Phenyltriethylammoniumchlorid, Benzyltrimethylammoniumchlorid, -bromid und -hydroxid, Benzyltriethylammoniumchlorid und -bromid, Benzyltributylammoniumchlorid und -bromid, Dibenzyldiethylammoniumchlorid, Dibenzyldiethylammoniumchlorid, Lauryldimethylbenzylammoniumchlorid, Laurylpyridiniumchlorid, Cetylpyridiniumchlorid, Benzylpyridiniumchlorid, Tetraphenylphosphoniumchlorid, Benzyltriphenylphosphoniumiodid, Ethyltriphenylphosphoniumbromid, Tetra-n-butylphosphoniumchlorid und Tri-n-butylhexadecylphosphoniumbromid.

Werden Tenside eingesetzt, dann betragen ihre Mengen in der Regel 10 bis 50 g, bevorzugt 15 bis 25 g pro kg Perylimid (II).

Die erfindungsgemäße Alkylierungsreaktion wird im allgemeinen bei 60 bis 220°C, vorzugsweise bei 140 bis 180°C, und unter Eigendruck (in der Regel 2 bis 20 bar; Sieden des Lösungsmittels, Freisetzung von CO₂) durchgeführt.

Die Reaktionszeiten betragen üblicherweise 4 bis 12 h, insbesondere 5 bis 9 h.

Verfahrenstechnisch geht man beim erfindungsgemäßen Verfahren zweckmäßigerweise wie folgt vor: Man suspendiert die anorganische Base und das Perylimid (II) in einem Autoklaven im gewählten Lösungsmittel, gibt nach Spülen mit Stickstoff das Alkylierungsmittel zu, was im Fall des bevorzugten Methyl- und Ethylchlorids vorteilhaft durch Aufpressen geschieht, und erhitzt die Mischung unter Rühren in etwa 0,5 bis 2 h auf die Reaktionstemperatur. Nach etwa 5 bis 10 stündigem Rühren bei dieser Temperatur kühlt man ab und entspannt den Autoklaven.

Die Aufarbeitung des Reaktionsgemisches auf die Alkylperylimide (I) kann in üblicher Weise durch Abfiltrieren, Waschen zunächst mit Lösungsmittel und dann mit Wasser und anschließendes Trocknen erfolgen.

Mit Hilfe des erfindungsgemäßen Verfahrens können die Alkylperylimide (I) in guten Ausbeuten und sehr hoher Reinheit auf einfache Weise hergestellt werden. Die erhaltenen Alkylperylimide (I) können ohne weitere Reinigung direkt nach üblicher Pigmentveredelung für Färbezwecke eingesetzt werden.

Besondere Bedeutung hat das erfindungsgemäße Verfahren für die Herstellung des Dimethylperylimids (Ia), das als leicht gelbstichiges Rotpigment mit einer Reinheit von in der Regel > 95 % in Form etwa 1 bis 100 µm langer Nadeln erhalten wird.

### Beispiel

In einem Rührwerksautoklaven wurden 50 g Perylen-3,4,9,10-tetracarbonsäurediimid (II; 96 %ig; ber. 100 %; erhalten durch Alkalischmelze von Naphthalimid) unter Rühren in eine Mischung von 67,5 g wasserfreiem Kaliumcarbonat und 500 g Dimethylacetamid eingetragen. Nach Spülen mit Stickstoff wurden 42 g Methylchlorid aufgepreßt. Das Reaktionsgemisch wurde dann in 1 h auf 160°C erhitzt (zunehmender Eigendruck von 4 auf 12 bar), 6 h bei dieser Temperatur gerührt und anschließend abgekühlt.

Nach dem Entspannen wurde das Produkt abfiltriert, zunächst mit Dimethylacetamid und dann mit Wasser gewaschen und bei 70 °C getrocknet.

Es wurden 52,5 g N,N'-Dimethylperylen-3,4,9,10-tetracarbonsäurediimid (Ia) mit einer Reinheit von 96 % in Form leicht filtrierbarer, 1 - 100 µm langer Nadeln erhalten, was einer Ausbeute von 96 % entspricht. Die Pigmentveredelung (Mahlung und Rekristallisation) ergab ein brillantes gelbstichiges Rotpigment.

## Patentansprüche

1. Verfahren zur Herstellung von N,N'-Di-C₁-C₄-alkylperylen-3,4,9,10-tetracarbonsäurediimiden (I) durch Umsetzung von Perylen-3,4,9,10-tetracarbonsäurediimid (II) mit einem C₁-C₄-Alkylhalogenid, **dadurch gekennzeichnet, daß** man die Umsetzung in einem dipolar-aprotischen organischen Lösungsmittel in Gegenwart einer anorganischen Base vornimmt.

2. Verfahren nach Anspruch 1, **dadurch gekennzeichnet, daß** man als dipolar-aprotisches Lösungsmittel Carbonsäureamide, Lactame, cyclische und acyclische Harnstoffderivate, Sulfoxide oder Sulfone oder deren Mischungen einsetzt.

3. Verfahren nach Anspruch 1 oder 2, **dadurch gekennzeichnet, daß** man als dipolar-aprotisches Lösungsmittel Dimethylformamid oder Dimethylacetamid einsetzt.

4. Verfahren nach den Ansprüchen 1 bis 3, **dadurch gekennzeichnet, daß** man als anorganische Base Alkalimetallsalze schwacher anorganischer Säuren einsetzt.

5. Verfahren nach den Ansprüchen 1 bis 4, **dadurch gekennzeichnet, daß** man als anorganische Base Natrium- oder Kaliumcarbonat einsetzt.

6. Verfahren nach den Ansprüchen 1 bis 5, **dadurch gekennzeichnet, daß** man als Alkylhalogenide die Alkylchloride einsetzt.

7. Verfahren nach den Ansprüchen 1 bis 6, **dadurch gekennzeichnet, daß** man die Umsetzung bei 140 bis 180°C unter Eigendruck vornimmt.

8. Verfahren nach den Ansprüchen 1 bis 7, **dadurch gekennzeichnet, daß** man es zur Herstellung von N,N'-Dimethylperylen-3,4,9,10-tetracarbonsäurediimid (Ia) anwendet.

## Claims

1. A process for preparing N,N'-di-C₁-C₄-alkylperylene-3,4,9,10-tetracarboxylic diimides (I) by reacting perylene-3,4,9,10-tetracarboxylic diimide (II) with a C₁-C₄-alkyl halide, which comprises performing the reaction in a dipolar-aprotic organic solvent in the presence of an inorganic base.

2. A process as claimed in claim 1, wherein carboxamides, lactams, cyclic and acyclic urea derivatives, sulfoxides or sulfones or mixtures thereof are used as dipolar-aprotic solvent.

3. A process as claimed in claim 1 or 2, wherein dimethylformamide or dimethylacetamide is used as dipolar-aprotic solvent.

4. A process as claimed in claims 1 to 3, wherein alkali metal salts of weak inorganic acids are used as inorganic base.

5. A process as claimed in claims 1 to 4, wherein sodium carbonate or potassium carbonate is used as inorganic base.

6. A process as claimed in claims 1 to 5, wherein the alkyl chlorides are used as alkyl halides.

7. A process as claimed in claims 1 to 6, wherein the reaction is performed at from 140 to 180°C under autogenous pressure.

8. A process as claimed in claims 1 to 7, employed in the preparation of N,N'-dimethylperylene-3,4,9,10-tetracarboxylic diimide (Ia).

## Revendications

1. Procédé de fabrication des diimides N,N'-di-(alkyle en C₁ à C₄)-pérylèn-3,4,9,10-tétracarboxyliques (I) par le moyen de la réaction du diimide pérylèn-3,4,9,10-tétracarboxylique (II) avec un halogénure d'alkyle en C₁ à C₄, **caractérisé en ce que** l'on réalise la réaction dans un solvant organique dipolaire et aprotique en présence d'une base minérale.

2. Procédé selon la revendication 1, **caractérisé en ce que** l'on met en oeuvre en tant que solvant organique dipolaire et aprotique les amides d'acide carboxylique, les lactames, les dérivés d'urée cycliques et acycliques, les oxydes sulfoniques ou des sulfones, ou bien des mélanges de ceux-ci.

3. Procédé selon la revendication 1 ou 2, **caractérisé en ce que** l'on met en oeuvre, en tant que solvant organique dipolaire et aprotique, le diméthylformamide ou le diméthylacétamide.

4. Procédé selon les revendications 1 à 3, **caractérisé en ce que** l'on met en oeuvre, en tant que base minérale, les sels de métaux alcalins d'acides minéraux faibles.

5. Procédé selon les revendications 1 à 4, **caractérisé en ce que** l'on met en oeuvre, en tant que base minérale, le carbonate de sodium ou de potassium.

6. Procédé selon les revendications 1 à 5, **caractérisé en ce que** l'on met en oeuvre, en tant qu'halogénure d'alkyle, les chlorures d'alkyle.

7. Procédé selon les revendications 1 à 6, **caractérisé en ce que** l'on réalise la réaction à une température comprise entre 140 °C et 180 °C et à la pression autogène.

8. Procédé selon les revendications 1 à 7, **caractérisé en ce que** l'on emploie pour la fabrication du diimide N,N'-diméthylpérylèn-3,4,9,10-tétracarboxylique (Ia).
